## Europäisches Patentamt
## European Patent Office
## Office européen des brevets

(19)

(11) Publication number: 0 145 213
A2

(12) # EUROPEAN PATENT APPLICATION

(21) Application number: 84307426.1

(22) Date of filing: 29.10.84

(51) Int. Cl.⁴: H 01 B 3/44
C 08 L 23/08

(30) Priority: 16.11.83 GB 8330550

(43) Date of publication of application:
19.06.85 Bulletin 85/25

(84) Designated Contracting States:
AT BE CH DE FR IT LI LU NL SE

(71) Applicant: STANDARD TELEPHONES AND CABLES
PUBLIC LIMITED COMPANY
190 Strand
London, WC2R 1DU(GB)

(72) Inventor: Bury, John Robert Ivor
17, Greenways
Glossfield Essex(GB)

(72) Inventor: Brett, Douglas Charles
2, Green Street
Little Hadham Ware Hertfordshire(GB)

(74) Representative: Dennis, Mark Charles
STC Patent Department Edinburgh Way
Harlow Essex CM20 2SH(GB)

(54) Oil resistant flame retardant compositions.

(57) A fire retardant, oil resistant polymer composition
includes an ethylene methyl acrylate copolymer blended
with one or more of ethylene vinyl acetate, ethylene ethyl
acrylate, ethylene butyl acrylate or ethylene propylene diene
monomor. The composition also contains a cross-linking
initiator and a hydrated metal oxide filler. The material may
be used as a insulant coating on electrical or fibre optic
cables.

## OIL RESISTANT FLAME RETARDENT COMPOSITIONS

This invention relates to halogen-free, oil resistant, flame retardent, plastics compositions for coating electrical wires and cables and to methods of making such compositions.

Flame retardent plastics compositions are employed extensively for the insulation and sheathing of electrical or fibre optic cables, particularly where such cables are used in industrial/military applications where a fire can have serious consequences. The conditions in which such cables are installed frequently involve exposure to oil or chemical fluids e.g. shipboard applications. Under such conditions, conventional halogen-free insulation and sheathing materials deteriorate quickly necessitating premature replacement.

Where cables are intended for shipboard application they are installed at an early stage in the shipbuilding process. Thus it is generally impossible to effect replacement without a considerable amount of dismantling of the vessel. It is therefore desirable that such cables are made of oil resistant materials to reduce or obviate the need for replacement.

Conventional oil resistant plastics are generally halogenated materials. Such materials may not burn on heating but they produce large quantities of toxic fumes and are thus quite unmitable for marine application.

The object of the invention is to minimise or to overcome this disadvantage.

According to one aspect of the invention there is provided an electrical or fibre optic cable having a protective sheath of a fire retardent, oil resistant plastics composition, characterised in that the plastics comprises a cross-linked copolymer blend of ethylene methyl acrylate (EMA) together with ethylene ethyl acrylate (EEA), a thylene butyl acrylate (EBA), ethylene propylene diene monomer or mixtures thereof.

According to another aspect of the invention there is provided a flame retardent, oil resistent plastics composition, including an ethylene methyl acrylate copolymer (EMA) blended with ethylene vinyl acrylate (EVA), ethylene ethyl acetate (EEA), ethylene butyl acrylate (EBA), ethylene propylene diene monomer or mixtures thereof, a coupling agent, a cross linking agent, and a filler comprising a hydrated metal oxide, characterised in that the EMA copolymer comprises 50 to 95 weight percent of the total plastics blend, and that the filler comprises 80 to 250 weight percent of the plastics blend.

According to a further aspect of the invention there is provided a method of making a flame retardant, oil resistant plastics composition, the method including blending at a temperature below $160^{\circ}$C an ethylene methyl acrylate copolymer (EMA) together with, ethylene vinyl acetate (EVA), ethylene ethyl acrylate (EEA), ethylene butyl acrylate (EBA), ethylene propylene diene monomer or mixtures thereof, a coupling agent, a non linking agent and a hydrated metal oxide filler, and pellitising and cross-linking the blended composition.

Typically the filler comprises trihydrated alumina or hydrated magnesium oxide. The composition may also contain a minor proportion of anti-oxidants and lubricants. These additives do not significantly effect the fire retardent or oil resistant properties of the composition but are added to improve its service and handling properties. The composition may be used for coating both electrical and fibre optic cables.

Typically we employ polymer blends having the following range of compositions all of which are given in parts by weight.

| | |
|---|---|
| EMA (VAMAC) | 50 to 95 |
| Other Copolymer(s) | 5 to 50 |
| Filler | 80 to 250 |
| Coupling agent | 0.5 to 5 |
| Antioxidant | 0.1 to 3 |
| Initiator | 0.5 to 10 |
| Lubricant | 0.5 to 10 |

The constituent materials are compounded e.g. in a Banbury mixer or twin screw compounding extruder up to a temperature of $160^{O}C$ and may then be pelletised for subsequent use as feed stock for extrusion on to an electrical cable. Best properties are obtained from cable coatings that are radiation cross-linked using an electron beam or cobalt source but an alternative chemical cross-linking could be achieved by the incorporation of a suitable peroxide in the formulation in the ratio of 0.1 to 5 parts by weight per hundred parts of polymer. Cross-linking can then be achieved using conventional vulcanisation techniques.

Typically we employ a silane or titanate coupling agent, methacrylate initiator and a phenolic antioxidant but other conventional materials can of course be employed. The lubricant may comprise a stearate or oleate.

By way of example the following composition was prepared:-

| | |
|---|---|
| EMA (Vamac N123) | 70 |
| EVA | 30 |
| Alumina trihydrate | 150 |
| Phenolic Antioxidant | 2 |
| Silane coupling agent | 2 |
| Stearate lubricant | 1.5 |
| Methacrylate Initiator | 5 |

The material was compounded as previously described, cross linked and then tested to MOD Specification NES 518. The material had a measured oxygen index of 33 and a temperature index of 300.

Exposure to diesel fuel and lubricating oils produced a volume swelling of 15% over a period of 28 days at 50%. Salt water under similar conditions produced a swelling of less than 5%. This compares favourably with conventional flame retardant materials which typically display a swelling of 100 to 150% in oils.

CLAIMS:-

1.      An electrical or fibre optic cable having a protective sheath of a fire retardent, oil resistant plastics composition, characterised in that the plastics comprises a cross-linked copolymer blend of ethylene methyl acrylate (EMA) together with ethylene ethyl acrylate (EEA), a thylene butyl acrylate (EBA), ethylene propylene diene monomer or mixtures thereof.

2.      A flame retardent, oil resistent plastics composition, including an ethylene methyl acrylate copolymer (EMA) blended with ethylene vinyl acetate (EVA), ethylene ethyl acrylate (EEA), ethylene butyl acrylate (EBA), ethylene propylene diene monomer or mixtures thereof, a coupling agent, a cross linking agent and a filler comprising a hydrated metal oxide, characterised in that the EMA copolymer comprises 50 to 95 weight percent of the total plastics blend, and that the filler comprises 80 to 250 weight percent of the plastics blend.

3.      A plastics composition as claimed in claim 2 characterised in that the filler comprises alumina trihydrate, hydrated magnesium oxide or mixtures thereof.

4.      A plastics composition as claimed in claim 2 or 3, characterised in that the cross linking agent is a methacrylate initiator.

5.      A plastics composition as claimed in claim 2, 3 or 4, and incorporating a silane or titanate coupling agent.

6.      A plastics composition as claimed in any one of claims 2 to 5 and incorporating a lubricant.

7.      A plastics composition as claimed in claim 6, characterised in that the lubricant is a stearate or oleate.

8.      An electrical or fibre optic cable coated with a plastics composition as claimed in any one of claims 2 to 7.

9.      A method of making a flame retardant, oil resistant plastics composition, the method including blending at a temperature below 160$^O$C an ethylene methyl acrylate copolymer (EMA) together with, ethylene vinyl acetate (EVA), ethylene ethyl acrylate (EEA), ethylene butyl acrylate (EBA), ethylene propylene diene monomer or mixtures thereof, a coupling agent, a non linking agent and a hydrated metal oxide filler, and pellitising and cross-linking the blended composition.

10.      . A method as claimed in claim 9, characterised in that the composition is cross-linked by ironising radiation.